(19) Europäisches Patentamt
European Patent Office
Office européen des brevets

(11) **EP 2 474 879 A2**

(12) **EUROPEAN PATENT APPLICATION**

(43) Date of publication:
**11.07.2012 Bulletin 2012/28**

(51) Int Cl.:
***G06F 1/16*** *(2006.01)*      ***G06F 3/048*** *(2006.01)*
***H04M 1/725*** *(2006.01)*

(21) Application number: **11193329.7**

(22) Date of filing: **13.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.01.2011 KR 20110002400**

(71) Applicant: **Samsung Electronics Co., Ltd**
**Suwon-si, Gyeonggi-do 442-742 (KR)**

(72) Inventors:
• **Lee, Dong-heon**
**Seoul (KR)**

• **Yang, Gyung-hye**
**Seoul (KR)**
• **Kim, Jung-geun**
**Gyeonggi-do (KR)**
• **Yoon, Soo-yeoun**
**Seoul (KR)**
• **Jo, Sun-haeng**
**Gyeonggi-do (KR)**
• **Kim, Yoo-tai**
**Gyeonggi-do (KR)**

(74) Representative: **Brandon, Paul Laurence**
**Appleyard Lees**
**15 Clare Road**
**Halifax, HX1 2HY (GB)**

(54) **Dispaly apparatus and dislaying method thereof**

(57) A display apparatus is provided including a user interface unit which displays a plurality of icons and a control unit which, if a stretch motion of widening a touch point while one of the plurality of icons is touched, controls the user interface unit to execute part of a function corresponding to the icon and display a function window corresponding to the part of functions.

# FIG. 3

**Description**

**CROSS-REFERENCE TO RELATED APPLICATIONS**

This application claims priority from Korean Patent Application No. 2011-0002400, filed in the Korean Intellectual Property Office on January 10, 2011, the disclosure of which is incorporated herein by reference.

**BACKGROUND**

**1. Field**

Apparatuses and methods consistent with the exemplary embodiments relate to a display apparatus and a displaying method thereof.

**2. Related Art**

A related art Graphic User Interface (GUI) used as a GUI item such as an icon, a menu, or an anchor displayed on a touch display is selected using a pointer. To input a user command in such a GUI environment, a user moves a pointer to a desired item using an input device such as a touch pad and presses a specific button provided on the input device so that a function corresponding to the item where the pointer is located may be executed.

A user may select a GUI by touching a screen of a touch display so that a widget program or an application corresponding to the selected GUI may be executed.

If a user wishes to execute a widget program, a related art display apparatus executes a menu window to call a sub-tab for executing the widget program.

Additionally, if a user wishes to select and view a photo or video, a related art display apparatus identifies the photo or video by displaying it on a full screen.

A user desires to manipulate a GUI using a method and thus requires a method for executing a widget program, an image thumbnail, or a video preview corresponding to a desired GUI item.

**SUMMARY**

An aspect of the exemplary embodiments relates to a display apparatus which displays a widget program on one portion of the screen of a display apparatus using an intuitive method and a displaying method thereof.

According to an exemplary embodiment, a displaying method in a display apparatus includes displaying a plurality of icons and, if a stretch motion of widening a touch point while one of the plurality of icons is touched, executing part of a function corresponding to the icon and displaying a function window corresponding to the part of the function.

The displaying the function window may include displaying remaining icons from among the plurality of icons along with the function window.

A size of the function window may be determined in proportion to a scale of the stretch motion. In addition, if a scale of the stretch motion is greater than a first threshold value and less than a second threshold value, a size of the function window may be determined to be a default value, and if a scale of the stretch motion is greater than a second threshold value, the function window may be displayed on full screen of the display apparatus.

The displaying the function window may include, if a stretch motion of widening a touch point is input while an icon for a widget from among the plurality of icons is touched, converting the icon for a widget to a widget window for displaying widget contents and displaying the widget window.

The displaying the function window may include, if a stretch motion of widening a touch point is input while an icon for an image file from among the plurality of icons is input, converting the icon for an image file to a thumbnail image window for displaying an image included in the image file and displaying the thumbnail image window.

The displaying the function window may include, if a stretch motion of widening a touch point is input while an icon for a video file from among the plurality of icons is touched, converting the icon for a video file to a preview window for displaying video included in the video file and displaying the preview window.

The displaying the function window may include, if a drag motion of dragging an icon in a form of a size and shape while the icon is touched, executing a part of a function corresponding to the icon and displaying a function window corresponding to the part of the function.

The displaying the function window may include, if a motion of panning, tilting, or vibrating the display apparatus is input while the icon is touched, executing part of a function corresponding to the icon and displaying a function window corresponding to the part of the function.

The method may further include, if a shrink motion of reducing a distance between touch points is input while the function window is touched, converting the function window to the icon and displaying the icon.

The displaying the function window may include applying an animation effect to the icon, converting the icon to the function window, and displaying the function window.

The displaying the function window may include displaying a setting menu regarding a function of the icon.

According to another exemplary embodiment, a display apparatus includes a user interface unit which displays a plurality of icons and a control unit which, if a stretch motion of widening a touch point while one of the plurality of icons is touched, executes part of a function corresponding to the icon and displays a function window corresponding to the part of the function.

The control unit may control the user interface unit to display remaining icons from among the plurality of icons along with the function window.

The control unit may control the user interface unit to display the function window having a size which may be determined in proportion to a scale of the stretch motion.

The control unit may control the user interface unit to display the function window having a default size if a scale of the stretch motion is greater than a first threshold value and less than a second threshold value, and the control unit may control the user interface unit to display the function window on full screen of the user interface unit if a scale of the stretch motion is greater than a second threshold value.

The control unit, if a stretch motion of widening a touch point is input while an icon for a widget from among the plurality of icons is touched, may control the user interface unit to convert the icon for a widget to a widget window for displaying widget contents and display the widget window.

The control unit, if a stretch motion of widening a touch point is input while an icon for an image file from among the plurality of icons is input, may control the user interface unit to convert the icon for an image file to a thumbnail image window for displaying an image included in the image file and display the thumbnail image window.

The control unit, if a stretch motion of widening a touch point is input while an icon for a video file from among the plurality of icons is touched, may control the user interface unit to convert the icon for a video file to a preview window for displaying video included in the video file and display the preview window.

The control unit, if a drag motion of dragging an icon in a form of a size and shape while the icon is touched, may control the user interface unit to execute part of a function corresponding to the icon and display a function window corresponding to the part of the function.

The apparatus may further include a sensor unit which senses a motion of panning, tilting, or vibrating the display apparatus, and the control unit, if a motion of panning, tilting, or vibrating the display apparatus is sensed by the user sensor unit while one icon from among the plurality of icons is touched, may control the user interface unit to execute the part of function corresponding to the icon and display a function window corresponding to the part of the function.

The control unit, if a shrink motion of reducing a distance between touch points is input while the function window is touched, may control the user interface unit to convert the function window to the icon and display the icon.

The control unit may control the user interface unit to apply an animation effect to the icon, convert the icon to the function window, and display the function window.

The control unit may control the user interface unit to display a setting menu regarding a function of the icon.

According to an exemplary embodiment, a user may execute a widget program using an intuitive method. In addition, as a widget window for displaying a widget program is displayed on a display screen along with a plurality of icons, the user may perform multi-tasking. Furthermore, the user may return to a background screen by ending a widget program using a simple manipulation which is an inverse operation of the above-mentioned intuitive method.

## BRIEF DESCRIPTION OF THE DRAWINGS

The above and/or other aspects will be more apparent from the following description of the exemplary embodiments, taken in conjunction with the accompanying drawings, in which:

FIGS. 1 and 2 are block diagrams illustrating a display apparatus according to an exemplary embodiment;

FIG. 3 is a concept diagram illustrating execution of a widget program according to an exemplary embodiment;

FIGS. 4A to 4C are concept diagrams illustrating execution of a widget program according to an exemplary embodiment;

FIGS. 5A to 5C are concept diagrams illustrating execution of a widget program according to an exemplary embodiment; and

FIG. 6 is a flowchart illustrating a displaying method according to an exemplary embodiment.

## DETAILED DESCRIPTION OF THE EXEMPLARY EMBODIMENTS

Exemplary embodiments are described in higher detail below with reference to the accompanying drawings. In the following description, like drawing reference numerals are used for the like elements. The matters defined in the description, such as detailed construction and elements, are provided to assist in a comprehensive understanding of the exemplary embodiments. However, the exemplary embodiments can be practiced without those specifically defined matters. Also, well-known functions or constructions are not described in detail.

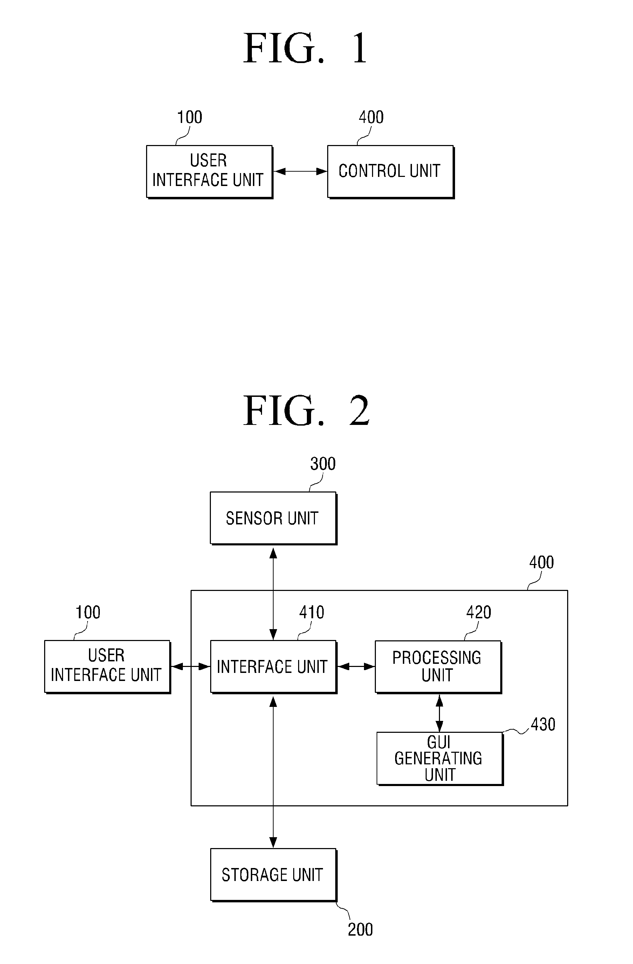

FIG. 1 is a block diagram to explain a display apparatus according to an exemplary embodiment. The display apparatus may comprise a user interface unit 100 and a control unit 400.

The user interface unit 100 may display a plurality of icons. In addition, the user interface unit 100 may receive a user's stretch motion of touching one icon from among the plurality of icons and stretching a touched portion.

The user interface unit 100 may include a touch screen which can sense a touch. Herein, the touch screen represents a screen that can receive data directly by detecting location of a touch as a hand or an object touches a specific text or a specific portion of the screen without using a keyboard so as to perform processing by stored software.

A touch screen may operate as an apparatus such as a touch panel is attached to a screen of a general monitor. The touch panel causes invisible infrared rays to flow left, right, up and down so as to create a plurality of rectangular grids on the screen, and if a fingertip or an object touches the grids, its location may be detected.

Accordingly, if a user's hand touches a text or picture information displayed on a screen including a touch panel, the user's intention is identified according to the location of the touched screen, and a corresponding command is processed on a computer. Therefore, the user may obtain desired information.

The user interface unit 100 outputs a touch signal corresponding to a user's touch to the control unit 400. The user's touch may be made by the user's fingertip or using another object which can be touched.

In addition, the user interface unit 100 may display various displays. More specifically, the user interface unit 100 may display a background screen including a GUI item such as an icon indicating a plurality of applications.

Furthermore, the user interface unit 100 may display a screen of an application currently being executed, a web browser screen, and a screen corresponding to a multimedia file after receiving instructions from the control unit 400. The function of the user interface unit 100 of displaying various types of screens under the control of the control unit 400 is known to those skilled in the art.

The control unit 400 may receive a user's input signal from the user interface unit 100. More specifically, the control unit 400 may receive two touch inputs on an icon displayed on the user interface unit 100 from a user. A user may input two touches on at least two touch portions of the user interface unit 100 corresponding to icons so that the distance between the two touch points increases as time elapses. That is, a user may input a motion which looks as if a user widens the distance between the two touched portions, which is referred to herein as a stretch motion.

If a stretch motion is input to the user interface unit 100, the control unit 400 may control the user interface unit 100 to execute a part of a function of an icon while displaying a function window corresponding to the part of the function. Herein, the function window is a window for displaying that an icon function is executed. Examples of a function window include a widget window, an image thumbnail window, and a video preview window. For example but not by way of limitation, the exemplary embodiment includes but is not limited to a case of a function window being a widget window.

In addition, the control unit 400 may control the user interface unit 100 to display a menu for setting a function of an icon. The menu for setting a function of an icon may be illustrated in a table which displays the types of an icon function.

The control unit 400 may control the user interface unit 100 to display an animation effect while an icon is transformed to a function window. For example, the size of an icon may increase in response to a stretch motion and be transformed to a function window at a moment.

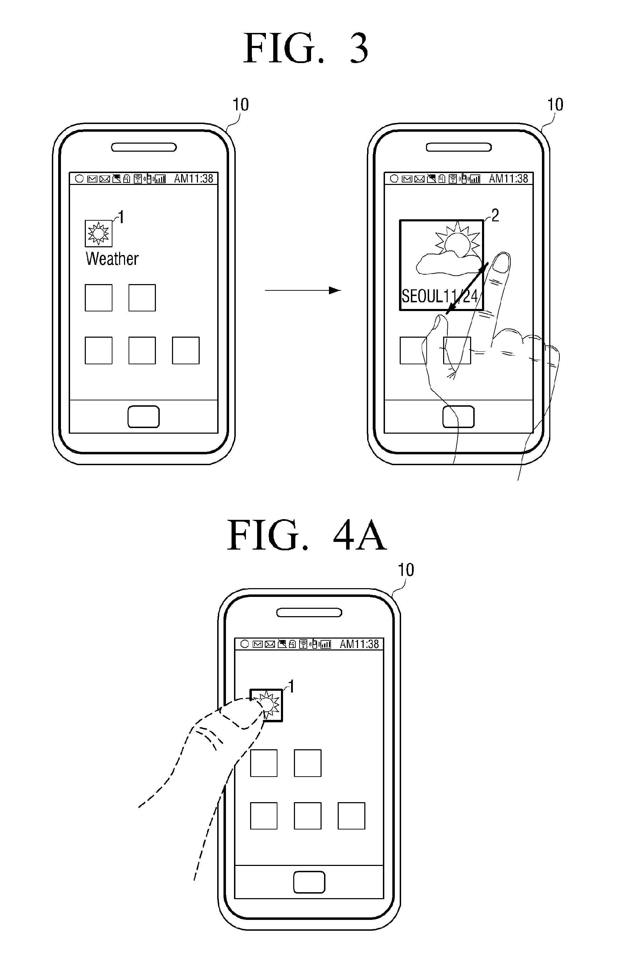

That the user interface unit 100 displays a converted widget window along with a plurality of icons will be explained with reference to FIG. 3.

As described above, a user may execute a widget program by inputting an intuitive stretch motion to the user interface unit 100 without calling a sub-tab related to a menu to execute the widget program.

FIG. 2 is a block diagram to explain the display apparatus 10 according to an exemplary embodiment. The display apparatus 10 may include the user interface unit 100, a storage unit 200, a sensor unit 300, and the control unit 400. In addition, the control unit 400 may comprise an interface unit 410, a processing unit 420 and a GUI generating unit 430.

As described above with respect to FIG. 1, if a stretch motion is input to the user interface unit 100, the user interface unit 100 may create data of coordinates of the user interface unit 100 corresponding to the input stretch motion and transmit the data to the interface unit 410.

The interface unit 410 may transmit data to other components of the control unit 400 such as the user interface unit 100, the storage unit 200 or the sensor unit 300.

The coordinates of the interface unit 100 transmitted to the interface unit 410 may be transmitted to the processing unit 420, or may be transmitted to the storage unit 200 and stored therein.

The processing unit 420 may control overall operation of components such as the user interface unit 100, the storage unit 200, and the sensor unit 300. In addition, the processing unit 420 may determine whether a stretch motion is input using the coordinates on the user interface unit 100 transmitted from the interface unit 410.

For example, if a user inputs an initial touch on specific coordinates of (xp1, yp1) and (xp2, yp2), the initial coordinates, (xp1, yp1) and (xp2, yp2), become data and may be transmitted to the processing unit 420 and the storage unit 200.

The processing unit 420 determines a distance between the initial touch points using [Equation 1].

【Equation 1】

$$\sqrt{(xp1-xp2)^2+(yp1-yp2)^2}$$

The distance between the initial touch points which is determined using [Equation 1] may be stored in the storage unit 200.

Subsequently, if a user performs a stretch motion to input a touch on (xf1, yf1) and (xf2, yf2), (xf1, yf1) and (xf2, yf2) become data and may be transmitted to the processing unit 420.

The processing unit 420 may determine a distance between touch points using [Equation 2].

【Equation 2】

$$\sqrt{(xf1-xf2)^2+(yf1-yf2)^2}$$

The processing unit 420 may store the distance between touch points which is determined using [Equation 2] in the storage unit 200. Accordingly, time series data regarding a distance between touch points may be stored in the storage unit 200.

Subsequently, the processing unit 420 reads out time series data regarding a distance between the touch points from the storage unit 200, and if the distance between the touch points increases as time goes by and the level of increase is greater than a threshold value, it may be determined that a stretch motion is input to the user interface unit 100.

If it is determined that a stretch motion is input to the user interface unit 100, the processing unit 420 controls a GUI generating unit to generate GUI graphic data regarding a background screen including a widget window.

More specifically, the processing unit 420 may read out graphic data regarding a widget window and graphic data regarding a background screen pre-stored in the storage unit 200, and transmit the data to the GUI generating unit 430.

The GUI generating unit 430 may read out graphic data regarding a widget window and graphic data regarding a background screen and generate screen data to be displayed on the user interface unit 100.

The GUI generating unit 430 may generate screen data such that a widget window coexists with the remaining icons. In addition, the GUI generating unit 430 may generate screen data such that a widget window is displayed on substantially the whole screen.

In addition, the GUI generating unit 430 may set a default value for the size of a widget window or may set the size of a widget window to correspond to a stretch motion input by a user.

Furthermore, if the scale of a stretch motion is greater than a first threshold value but less than a second threshold value, the GUI generating unit 430 may set the size of a widget window as a default value, and if the scale of a stretch motion is greater than the second threshold value, the GUI generating unit 430 may set the size of a widget window to fit the full screen of the user interface unit 100. In other words, if the scale of a stretch motion is greater than the second threshold value, the GUI generating unit 430 may display a widget in the form of a full screen application.

The generated screen data may be transmitted to the user interface unit 100 and thus, the user interface unit 100 may display the generated screen data, that is, the screen including a widget window for identifying a widget program.

As described above, the storage unit 200 may store graphic data regarding various widget windows or graphic data regarding a background screen. In addition, the storage unit 200 may store data regarding coordinates of a touch point of a user interface unit input to the user interface unit 100 in a time series manner. The storage unit 200 may also store not only an application or a widget program itself but also data for allowing the display apparatus 10 to operate.

The sensor unit 300 may detect overall movement operations of the display apparatus 10. For example, the sensor unit 100 may detect that the display apparatus 10 pans in a horizontal direction in which case, the sensor unit 100 may detect the panning distance, displacement, speed, or acceleration of the display apparatus with respect to a reference point.

In addition, the sensor unit 300 may detect that the display apparatus 10 tilts or vibrates in a specific direction.

To detect the above-mentioned panning, tilting, or vibrating operations, the sensor unit 300 may include a liner acceleration sensor or a gyro sensor. However, including a liner acceleration sensor or a gyro sensor is only an example, and any device which is capable of detecting panning, tilting, or vibrating operations of the display apparatus 10 including the sensor unit 300 may be substituted therefor.

In the above exemplary embodiment, the GUI generating unit 430 forms screen data including a widget window; however, the GUI generating unit 430 may form not only a widget window according to the type of an icon selected by a user but also a preview window regarding an image thumbnail, a slide show for an image thumbnail, or a video file.

For example, if a user inputs a stretch motion by designating an image storage icon displayed on the user interface unit 100, the GUI generating unit 430 may read out an image file from the storage unit 200 and generate data including a plurality of thumbnails for identifying image files easily. The image thumbnails may coexist with other icons on one portion of the user interface unit 100.

In another example, if a user inputs a stretch motion by designating a video storage icon displayed on the user interface unit 100, the GUI generating unit 430 may read out a video file from the storage unit 200 and generate data regarding a preview window for identifying video files. The video preview window may coexist with other icons on one portion of the user interface unit 100.

FIG. 3 is a concept diagram that illustrates execution of a widget program according to an exemplary embodiment. The display apparatus 10 may include an icon 1 for a widget. In the exemplary embodiment of FIG. 3, the widget program may be a program for providing weather forecast information.

A user may input two touches on a position where the user interface unit 100 corresponding to the icon 1 regarding a widget for identifying a program for generating whether forecast information is located.

If a user inputs a stretch motion of widening the distance between two touch points, the user interface unit 200 may convert an icon to a widget window for displaying widget contents and display the widget window.

As the icon is converted to the widget window and thus the size of the widget window increases, three icons disposed at a lower part of the user interface unit 200 are not displayed.

The size of a widget window may be set using coordinates of a touch point input based on a stretch motion input by a user.

If a stretch motion is input, the size of a widget window may be set to be a size.

Subsequently, if a user wishes to end a widget program, the inverse motion of a stretch motion, that is, an operation of reducing the distance between two touch points may be performed. Such an operation may be referred to as a shrink motion.

If a shrink motion is input, the user interface unit 200 may display the screen illustrated on the left side of FIG. 3 again.

FIGS. 4A to 4C are concept diagrams illustrating execution of a widget program according to an exemplary embodiment.

As illustrated in FIG. 4A, a user may designate an icon regarding a widget. An icon may be designated as the icon is fingered more than a threshold amount of time.

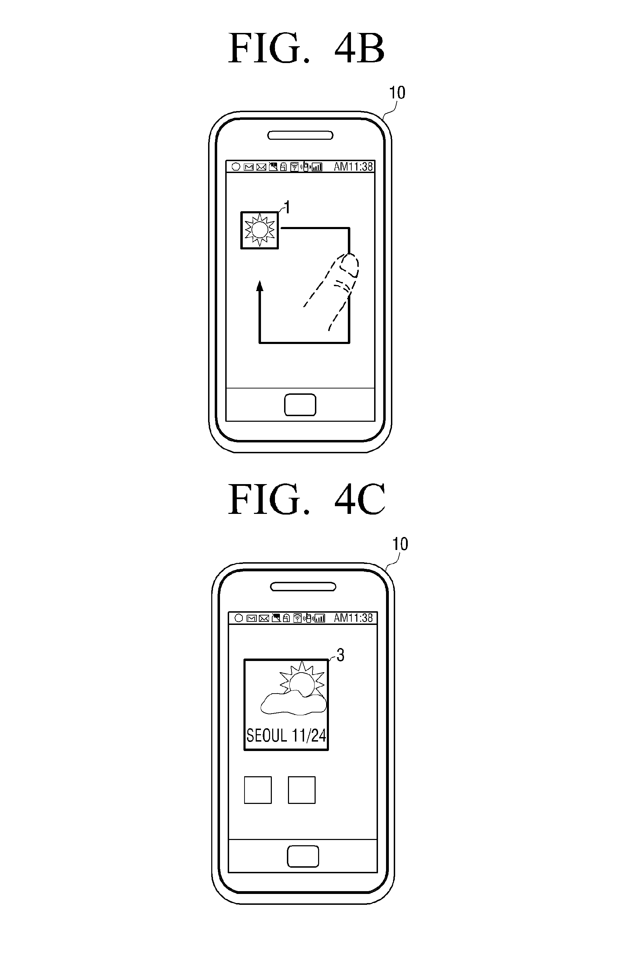

If an icon for a widget is designated, a drag motion in which the icon is dragged in the form of a size and shape while the icon is touched may be input to the user interface unit 200 as illustrated in FIG. 4B.

If a drag motion is input, the user interface unit 200 may convert an icon to a widget window for displaying widget contents and display the widget window as illustrated in FIG. 4C.

In this exemplary embodiment, the size of a widget window may be set to be the size of a figure dragged by a user. Alternatively, a widget window having a size not set based on the size of the figure dragged by a user may be displayed (e.g., predetermined size).

If a user wishes to end a widget program, the user may perform an inverse drag motion, that is, an operation of dragging the inside of a widget window while touching the widget window.

In response, the user interface unit 200 may display the screen illustrated in FIG. 4A.

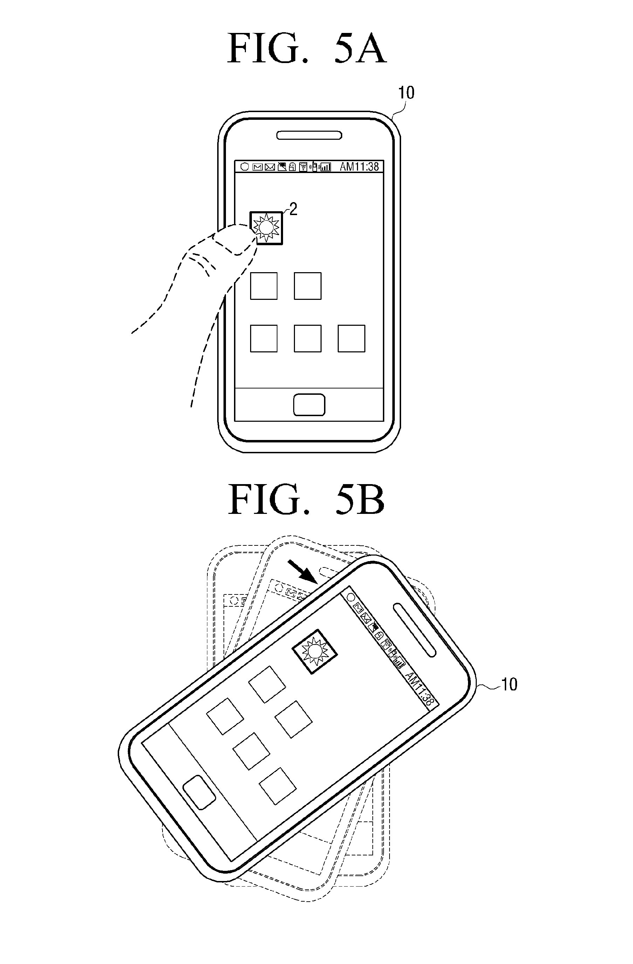

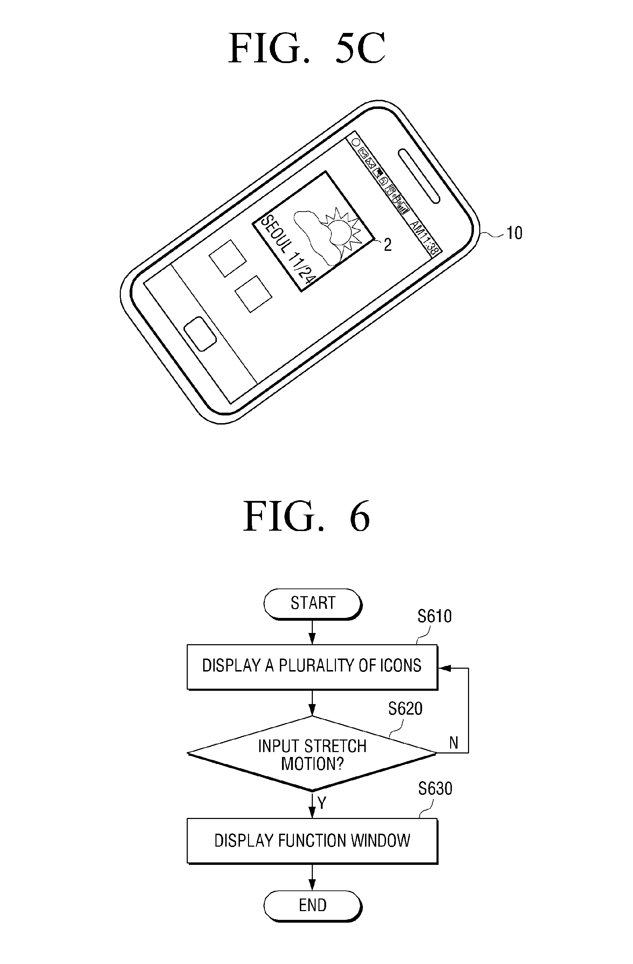

FIGS. 5A to 5C are concept diagrams to illustrating execution of a widget program according to an exemplary embodiment.

As illustrated in FIG. 5A, a user may designate an icon regarding a widget. An icon may be designated as the icon is fingered more than a threshold amount of time.

If an icon for a widget is designated, a user may tilt the display apparatus 10 while touching an icon for a widget as illustrated in FIG. 5B. The sensor unit 300 of the display apparatus 10 may detect a tilting operation and accordingly, the user interface unit 200 may convert the icon to a widget window and display the widget window.

Meanwhile, the configuration of the exemplary embodiment by panning or vibrating operation in addition to the tilting operation of the display apparatus 10 may be apparent to those skilled in the art.

If a user wishes to end a widget program, the user may pan, tilt, or vibrate a display apparatus while touching a widget window. In response, the user interface unit may display the screen illustrated in FIG. 5A again.

FIG. 6 is a flowchart illustrating a displaying method of the display apparatus 10 according to an exemplary embodiment.

The display apparatus 10 may display a plurality of icons on the user interface unit 200 (S61 0).

The display apparatus 10 determines whether a stretch motion in which one of a plurality of icons is touched and the touched portion is widened is input (S620). The operation of determining whether a stretch motion is input is substantially the same as described description.

If it is determined that a stretch motion is input to the display apparatus 10 (S620-Y), the display apparatus 10 may convert an icon to a function window and display the function window (S630).

The display apparatus 10 may display the remaining icons from among a plurality of icons along with the function window.

Meanwhile, the size of a function window may be determined in proportion to the size of a stretch motion. If the scale of a stretch motion is greater than the first threshold value but less than the second threshold value, the size of a function window may be set as a default value. If the scale of a stretch motion is greater than the second threshold value, the function window may be displayed on the full screen of the display apparatus 10. In this case, the function window may be executed in the form of a full screen application.

The above-described exemplary embodiments can also be embodied as computer readable codes which are stored on a computer readable recording medium (for example, non-transitory, or transitory) and executed by a computer or processor. The computer readable recording medium is any data storage device that can store data which can be thereafter read by a computer system.

Examples of the computer readable recording medium include read-only memory (ROM), random-access memory (RAM), CD-ROMs, magnetic tapes, floppy disks, optical data storage devices, and carrier waves such as data transmission through the Internet. The computer readable recording medium can also be distributed over network coupled computer systems so that the computer readable code is stored and executed in a distributed fashion. Also, functional programs, codes, and code segments for accomplishing the embodiments can be construed by programmers skilled in the art to which the disclosure pertains.

It will be understood that various modifications may be made. For example, suitable results may be achieved if the described techniques are performed in a different order and/or if components in a described system, architecture, device, or circuit are combined in a different manner and/or replaced or supplemented by other components or their equivalents.

If a a stretch motion of widening a touch point is input while an icon for a widget, from among a plurality of icons, is touched, the icon may be converted to a widget window for displaying widget contents and displayed.

If a stretch motion of widening a touch point is input while an icon for a widget, from among a plurality of icons, is touched, the icon may be converted to a widget window for displaying widget contents and displayed.

If a stretch motion of widening a touch point is input while an icon for an image file, from among a plurality of icons, is touched, the icon may be converted to a thumbnail image window for displaying an image included in the image file and displayed.

If a stretch motion of widening a touch point is input while an icon for a video file, from among a plurality of icons, is touched, the icon may be converted to a preview window for displaying video included in the video file and displayed.

If a drag motion of dragging an icon in the form of a size and shape while touching the icon is input, part of functions corresponding to the icon may be executed, and a function window corresponding to part of function may be displayed.

If a motion of panning, tilting or vibrating the display apparatus is input an icon is touched, part of functions corresponding to the icon may be performed and a function window corresponding to part of functions may be displayed.

If a shrink motion of reducing a distance between touch points is input while the function window is touched, the function window may be converted to the icon and displayed.

Meanwhile, if an icon is converted to a function window, an animation effect may be applied.

Further, a setting menu regarding an icon function may be displayed.

Although a few exemplary embodiments have been shown and described, it will be appreciated by those skilled in the art that changes may be made in these exemplary embodiments without departing from the principles and spirit of the inventive concept, the scope of which is defined in the appended claims and their equivalents.

**Claims**

1. A displaying method in a display apparatus, the method comprising:

   displaying a plurality of icons; and
   if a stretch motion of widening a touch point is performed while one of the plurality of icons is touched, executing a part of a function corresponding to the icon, and displaying a function window corresponding to the part of functions.

2. The method as claimed in claim 1, wherein the displaying the function window comprises displaying remaining icons from among the plurality of icons along with the function window.

3. The method as claimed in claim 1, wherein a size of the function window is determined in proportion to a scale of the stretch motion.

4. The method as claimed in claim 1, wherein, if a scale of the stretch motion is higher than a first threshold value and less than a second threshold value, a size of the function window is determined to be a default value, and if a scale of the stretch motion is higher than a second threshold value, the function window is displayed on full screen of the display apparatus.

5. The method as claimed in claim 1, wherein the displaying the function window comprises, if a stretch motion of widening a touch point is input while an icon for a widget from among the plurality of icons is touched, converting the icon for a widget to a widget window for displaying widget contents and displaying the widget window.

6. The method as claimed in claim 1, wherein the displaying the function window comprises, if a stretch motion of widening a touch point is input while an icon for an image file from among the plurality of icons is input, converting the icon for an image file to a thumbnail image window for displaying an image included in the image file and displaying the thumbnail image window.

7. The method as claimed in claim 1, wherein the displaying the function window comprises, if a stretch motion of widening a touch point is input while an icon for a video file from among the plurality of icons is touched, converting the icon for a video file to a preview window for displaying video included in the video file and displaying the preview window.

8. The method as claimed in claim 1, wherein the displaying the function window comprises, if a drag motion of dragging an icon in a form of a predetermined size and shape while the icon is touched, executing the part of the function corresponding to the icon and displaying a function window corresponding to the part of the function.

9. The method as claimed in claim 1, wherein the displaying the function window comprises, if a motion of panning, tilting, or vibrating the display apparatus is input while the icon is touched, executing the part of function corresponding to the icon and displaying a function window corresponding to the part of the function.

10. The method as claimed in claim 1, further comprising:

    if a shrink motion of reducing a distance between touch points is input while the function window is touched, converting the function window to the icon and displaying the icon.

11. The method as claimed in claim 1, wherein the displaying the function window comprises applying an animation effect to the icon, converting the icon to the function window, and displaying the function window.

12. The method as claimed in claim 1, wherein the displaying the function window comprises displaying a setting menu regarding a function of the icon.

13. A display apparatus, comprising:

    a user interface unit which displays a plurality of icons; and
    a control unit which, if a stretch motion of widening a touch point while one of the plurality of icons is touched, executes part of functions corresponding to the icon and displays a function window corresponding to the part of functions.

14. The apparatus as claimed in claim 13, wherein the control unit controls the user interface unit to display remaining icons from among the plurality of icons along with the function window.

15. The apparatus as claimed in claim 13, wherein the control unit controls the user interface unit to display the function window having a size which is determined in proportion to a scale of the stretch motion.

# FIG. 1

100

USER INTERFACE UNIT

400

CONTROL UNIT

# FIG. 2

300

SENSOR UNIT

400

100

USER INTERFACE UNIT

410

INTERFACE UNIT

420

PROCESSING UNIT

430

GUI GENERATING UNIT

200

STORAGE UNIT

# FIG. 3

# FIG. 4A

# FIG. 4B

# FIG. 4C

# FIG. 5A

# FIG. 5B

# FIG. 5C

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20110002400